# EUROPEAN PATENT APPLICATION

(11) **EP 4 613 811 A1**
(43) Date of publication of application: **10.09.2025**
(21) Application number: 24161195.3
(22) Date of filing: 04.03.2024
(51) Int. Cl.: C08L 23/14, C08L 27/06, E04B 1/66, E04D 5/10, B32B 27/30, B32B 27/32, C08L 23/12

(54) **SEALING ELEMENT WITH BIO-BASED FILLER COMPONENT**

(71) Applicant: Sika Technology AG, 6340 Baar (CH)
(72) Inventor: BARMET, Robin, 6060 Sarnen (CH); CARL, Wilfried, 8280 Kreuzlingen (CH); HOLDENER, Sabina, 6105 Schachen (CH); NUESSLEIN, Josefa, 8048 Zürich (CH)
(74) Representative: Sika Patent Attorneys

(57) **Abstract**

The invention is directed to a sealing element (1) comprising a waterproofing layer (2) comprising:
a) polyvinylchloride or polyolefin resin and
b) lignin powder.

## Description

### Technical field

The invention relates to the field of waterproofing of building constructions by using sealing devices comprising a waterproofing layer. Particularly, the invention relates to waterproofing and roofing membranes comprising a waterproofing layer based on a plasticized polyvinylchloride or polyolefin comprising a bio-based filler component.

### Background of the invention

In the field of construction polymeric sheets, which are often referred to as membranes, panels, or sheets, are used to protect underground and above ground constructions, such as basements, tunnels, and flat and low-sloped roofs, against penetration water. Waterproofing membranes are applied, for example, to prevent ingress of water through cracks that develop in concrete structures due to building settlement, load deflection, or concrete shrinkage. Roofing membranes used for waterproofing of flat and low-sloped roof structures are typically provided as single-ply or multi-ply membrane systems. In a single-ply system, the roof substrate is covered using a roofing membrane composed of a single waterproofing layer. In multi-ply membrane systems, roofing membranes comprising multiple waterproofing layers having similar or different composition are used. Single-ply membranes have the advantage of lower production costs compared to the multi-ply membranes but they are also less resistant to mechanical damages caused by punctures of sharp objects.

Commonly used materials for the roofing membranes include plastics, in particular thermoplastics such as plasticized polyvinylchloride (p-PVC), thermoplastic olefins (TPE-O, TPO), and elastomers such as ethylene-propylene diene monomer (EPDM). The roofing membranes are typically delivered to a construction site in form of rolls, transferred to the place of installation, unrolled, and adhered to the substrate to be waterproofed. The substrate on which the roofing membrane is adhered may be comprised of variety of materials. The substrate may, for example, be a concrete, metal, or wood deck, or it may include an insulation board or recover board and/or an existing membrane.

The plastics used in roofing membranes have a relatively high CO₂ footprint due to the petroleum based origin of the raw materials and energy intensive production process. According to a recent study, the greenhouse gas emissions generated across the life cycle of plastics has doubled since 1995, reaching 2 billion tons of CO₂ equivalent (CO2e) in 2015 representing 4.5 % of the global greenhouse gas emissions. Increase plastics production in coal-based, newly industrialized countries such as China, India, Indonesia, and South Africa has also been recognized as the main cause of the growing carbon footprint of plastics.

Although several carbon capture and storage (CCS) methods have been proposed, they have turned out to be economically inefficient due to their high energy and/or land use requirements. Current carbon capture concepts are based on physical or chemical absorption, and membrane or cryogenic separation, all of which are very energy intensive and have a low efficiency. The storage of the captured carbon may then be carried out by geological or marine sequestration, both of which are again very cost- and energy intensive and carry some risk regarding the environment

Bio-sequestration of carbon, i.e., conversion of CO₂ into biomass via photosynthesis, seems to provide an elegant way for sustainable CSS. Furthermore, the biomass could in turn be used for the production of bioenergy or other value-added products. Bio based CCS is most easily implemented by trees.

Generally, it would also be highly desirable to combine the benefits of the carbon capture and storage with increased performance of the product. At least the use of a renewable raw material should not result in deterioration of the application relevant properties of the product. PVC and polyolefin compounds are generally considered to be well suitable for blending with biomass fractions due to their broad performance and application spectrum, and longevity as well as recyclability of products based on PVC and polyolefin formulations.

When it comes to roofing membranes made from plasticized PVC or polyolefins, thermal stability is one of the most important features regarding longevity. Roofing membranes form the outermost protection layer of a roof system and, therefore, the material of the membrane must withstand unpredictable and harsh weather conditions such as extreme heat, high wind loads, rain, sleet, hail, heavy snow, and rapid temperature changes. A polyolefin- based roofing membrane typically contains a process stabilizer to protect the membrane during extrusion or calendering and a UV stabilizer and a thermal stabilizer to protect the membrane from heat and light degradation. However, the UV and heat stabilizers are very expensive compared to the other constituents of the roofing membrane material and their use has a significant impact on the price of the membrane. Furthermore, none of the commercially available heat stabilizers are bio-based.

It would thus be desirably to provide a polyvinylchloride- or polyolefin- based sealing element, particularly a roofing membrane, having a lower CO₂ footprint and at least equivalent performance, especially in terms of thermal stability, compared to State-of-the-Art polyvinylchloride and polyolefin- based sealing elements.

### Summary of the invention

The object of the present invention is to provide a sealing element, particularly a roofing membrane, having a lowered CO₂ footprint and improved thermal stability compared to the sealing elements of prior art.

Surprisingly, it has been found that the features of claim 1 achieve this object.

Particularly, it was surprisingly found out that adding lignin powder to a plasticized PVC formulation or a polyolefin formulation not only results in reduction of the CO₂ footprint but that the modified formulations also exhibit improved thermal stability. These PVC and polyolefin formulations are especially suitable for use in providing of sealing elements, such as roofing membranes, that due to their application environment are prone to thermal degradation.

Specifically, according to the invention, a sealing element is provided, the sealine element comprising a waterproofing layer comprising:
a) polyvinylchloride or polyolefin resin and
b) lignin powder.

Additional aspects of the present invention are presented in further independent claims.

Particularly preferred embodiments are outlined throughout the description and the dependent claims.

### Brief description of the Drawings

Fig. 1 shows a cross-section of a sealing element (1) comprising a waterproofing layer (2) and a layer of fiber material (3) fully embedded into the waterproofing layer (3).
Fig. 2 shows a cross-section of a sealing element (1) comprising a waterproofing layer (2) and a second waterproofing layer (4) adhered to the upper major surface of the waterproofing layer (4).

### Detailed description of the invention

A first aspect of the present invention is directed to a sealing element comprising a waterproofing layer comprising:
a) polyvinylchloride or polyolefin resin and
b) lignin powder.

The term "polymer" designates a collective of chemically uniform macromolecules produced by a polyreaction (polymerization, polyaddition, polycondensation) where the macromolecules differ with respect to their degree of polymerization, molecular weight and chain length. The term also comprises derivatives of said collective of macromolecules resulting from polyreactions, that is, compounds which are obtained by reactions such as, for example, additions or substitutions, of functional groups in predetermined macromolecules and which may be chemically uniform or chemically non-uniform.

The "amount or content of at least one component X" in a composition, for example "the amount of the at least one plasticizer" refers to the sum of the individual amounts of all plasticizers contained in the composition. Furthermore, in case the composition comprises 20 wt.-% of the at least one plasticizer, the sum of the amounts of all plasticizers contained in the composition equals 20 wt.-%.

The term "room temperature" designates a temperature of 23 °C.

The waterproofing layer is preferably a sheet-like element having upper and lower major surfaces, i.e., top and bottom surfaces. The term "sheet-like element" refers in the present document to elements having a length and width at least 25 times, preferably at least 50 times, more preferably at least 150 times greater than the thickness of the element.

In one embodiment, the waterproofing layer comprises 0.5 - 25 wt.-%, preferably 1.5 - 20 wt.-%, more preferably 2.5 - 20 wt.-% of the lignin powder.

It may be preferred that the lignin powder has a median particle size d₅₀ determined by sieve analysis according to the method as described in ASTM C136/C136M -2014 standard of 2 - 100 µm, preferably 10 - 60 µm.

The term "median particle size d₅₀" refers in the present disclosure to a particle size below which 50% of all particles by volume are smaller than the d₅₀ value. The particle size distribution can be determined by sieve analysis according to the method as described in ASTM C136/C136M -2014 standard ("Standard Test Method for Sieve Analysis of Fine and Coarse Aggregates).

Lignin powder with a median particle size falling within the above cited ranges have been found out to be especially suitable for use in a plasticized PVC and polyolefin formulation for providing waterproofing layers of sealing elements.

In a first exemplary embodiment, the waterproofing layer is a polyvinyl chloride- based layer comprising:
a) 25 - 65 wt.-%, preferably 30 - 60 wt.-% of polyvinylchloride resin,
b) 0.5 - 20 wt.-%, preferably 1.5 - 15 wt.-% of the lignin powder,
c) 10 - 50 wt.-%, preferably 15 - 45 wt.-% of at least one plasticizer, and
d) 0 - 15 wt.-%, preferably 0 - 10 wt.-% of at least one inorganic pigment.

Preferably, the polyvinylchloride resin has a K-value determined by using the method as described in ISO 1628-2-1998 standard in the range of 50 - 85, more preferably 65 - 75. The K-value is a measure of the polymerization grade of the PVC-resin and it is determined from the viscosity values of the PVC homopolymer as virgin resin, dissolved in cyclohexanone at 30° C.

The type of the at least one plasticizer is not particularly restricted in the present invention. Suitable plasticizers for the PVC-resin include but are not restricted to, for example, linear or branched phthalates such as di-isononyl phthalate (DINP), di-nonyl phthalate (L9P), diallyl phthalate (DAP), di-2-ethylhexyl-phthalate (DEHP), dioctyl phthalate (DOP), diisodecyl phthalate (DIDP), and mixed linear phthalates (911P). Other suitable plasticizers include phthalate-free plasticizers, such as trimellitate plasticizers, adipic polyesters, and biochemical plasticizers. Examples of biochemical plasticizers include epoxidized vegetable oils, for example, epoxidized soybean oil and epoxidized linseed oil and acetylated waxes and oils derived from plants, for example, acetylated castor wax and acetylated castor oil.

Particularly suitable phthalate-free plasticizers to be used in the waterproofing layer include alkyl esters of benzoic acid, dialkyl esters of aliphatic dicarboxylic acids, polyesters of aliphatic dicarboxylic acids or of aliphatic di-, tri- and tetrols, the end groups of which are unesterified or have been esterified with monofunctional reagents, trialkyl esters of citric acid, acetylated trialkyl esters of citric acid, glycerol esters, benzoic diesters of mono-, di-, tri-, or polyalkylene glycols, trimethylolpropane esters, dialkyl esters of cyclohexanedicarboxylic acids, dialkyl esters of terephthalic acid, trialkyl esters of trimellitic acid, triaryl esters of phosphoric acid, diaryl alkyl esters of phosphoric acid, trialkyl esters of phosphoric acid, and aryl esters of alkanesulphonic acids.

In one exemplary embodiment, the at least one plasticizer is selected from the group consisting of phthalates, trimellitate plasticizers, adipic polyesters, and biochemical plasticizers.

In a second exemplary embodiment, the waterproofing layer is a polyolefin- based layer comprising:
a) At least 25 wt.-%, preferably at least 35 wt.-% of polyolefin resin,
b) 1.5 - 25 wt.-%, preferably 2.5 - 20 wt.-% of the lignin powder,
c) 0 - 55 wt.-%, preferably 0 - 50 wt.-% of at least one flame retardant, and
d) 0 - 15 wt.-%, preferably 0 - 10 wt.-% of at least one inorganic pigment.

The term "polyolefin" refers in the present disclosure to homopolymers and copolymers produced of olefin monomers with or without other types of monomers.

Suitable polyolefins for use in the polyolefin- based layer include, for example, polyethylenes, polypropylenes, and ethylene vinyl acetate copolymers. The term "polyethylene refers here to an ethylene homopolymer or copolymer of ethylene with one or more α-olefins whereas the term "polypropylene" refers to a propylene homopolymer or copolymer of propylene with one or more α-olefins.

The term "α-olefin" designates an alkene having the molecular formula CₓH2ₓ (x corresponds to the number of carbon atoms), which features a carbon-carbon double bond at the first carbon atom (α-carbon). Examples of α-olefins include ethylene, propylene, 1-butene, 2-methyl-1-propene (isobutylene), 1-pentene, 1-hexene, 1-heptene and 1-octene. For example, neither 1,3-butadiene, nor 2-butene, nor styrene are referred as "α-olefins" according to the present document.

Examples of suitable polyethylenes include low density polyethylene (LDPE), linear low density polyethylene (LLDPE), and high density polyethylene (HDPE), preferably having a melting temperature (Tₘ) determined by differential scanning calorimetry (DSC) according to ISO 11357-3:2018 standard using a heating rate of 2 °C/min of at or above 100 °C, preferably at or above 105 °C, more preferably at or above 110 °C.

Further suitable polyethylenes include ethylene α-olefin copolymers, particularly random and block copolymers of ethylene and one or more C₃-C₂₀ α-olefin monomers, especially one or more of propylene, 1-butene, 1-pentene, 1-hexene, 1-heptene, 1-octene, 1-decene, 1-dodecene, and 1-hexadodecene, preferably comprising at least 60 wt.-%, more preferably at least 65 wt.-% of ethylene-derived units, based on the weight of the copolymer.

Suitable ethylene α-olefin random copolymers include, for example, ethylene-based plastomers, which are commercially available, for example, under the trade name of Affinity^{®}, such as Affinity@ EG 8100G, Affinity^{®} EG 8200G, Affinity@ SL 8110G, Affinity@ KC 8852G, Affinity^{®} VP 8770G, and Affinity@ PF 1140G (all from Dow Chemical Company); under the trade name of Exact^{®}, such as Exact@ 3024, Exact@ 3027, Exact@ 3128, Exact^{®} 3131, Exact@ 4049, Exact@ 4053, Exact^{®} 5371, and Exact@ 8203 (all from Exxon Mobil); and under the trade name of Queo^{®} (from Borealis AG) as well as ethylene-based polyolefin elastomers (POE), which are commercially available, for example, under the trade name of Engage@, such as Engage@ 7256, Engage@ 7467, Engage^{®} 7447, Engage^{®} 8003, Engage^{®} 8100, Engage@ 8480, Engage@ 8540, Engage@ 8440, Engage@ 8450, Engage@ 8452, Engage^{®} 8200, and Engage@ 8414 (all from Dow Chemical Company).

Suitable ethyleneα-olefin block copolymers include ethylene-based olefin block copolymers (OBC), which are commercially available, for example, under the trade name of Infuse^{®}, such as Infuse^{®} 9100, Infuse^{®} 9107, Infuse^{®} 9500, Infuse^{®} 9507, and Infuse^{®} 9530 (all from Dow Chemical Company).

Suitable polypropylenes include, for example, isotactic polypropylene (iPP), syndiotactic polypropylene (sPP), and homopolymer polypropylene (hPP), preferably having a melting temperature (Tₘ) determined by differential scanning calorimetry (DSC) according to ISO 11357-3:2018 standard using a heating rate of 2 °C/min of at or above 100 °C, preferably at or above 105 °C, more preferably at or above 110 °C.

Further suitable polypropylenes include propylene α-olefin copolymers, such as random and block copolymers of propylene and ethylene and random and block copolymers of propylene and one or more C₄-C₂₀ α-olefin monomers, in particular one or more of 1-butene, 1-pentene, 1-hexene, 1-heptene, 1-octene, 1-decene, 1-dodecene, and 1-hexadodecene, preferably comprising at least 60 wt.-%, more preferably at least 65 wt.-% of propylene-derived units, based on the weight of the copolymer.

Suitable propylene α-olefin random and block copolymers are commercially available, for example, under the trade names of Intune^{®}, and Versify (from Dow Chemical Company) and under the trade name of Vistamaxx^{®} (from Exxon Mobil).

Further suitable polypropylenes also include heterophasic propylene copolymers. These are heterophasic polymer systems comprising a high crystallinity base polyolefin and a low-crystallinity or amorphous polyolefin modifier. The heterophasic phase morphology consists of a matrix phase composed primarily of the base polyolefin and a dispersed phase composed primarily of the polyolefin modifier. Suitable commercially available heterophasic propylene copolymers include reactor blends of the base polyolefin and the polyolefin modifier, also known as "in-situ TPOs" or "reactor TPOs or "impact copolymers (ICP)", which are typically produced in a sequential polymerization process, wherein the components of the matrix phase are produced in a first reactor and transferred to a second reactor, where the components of the dispersed phase are produced and incorporated as domains in the matrix phase. Heterophasic propylene copolymers comprising polypropylene homopolymer as the base polymer are often referred to as "heterophasic propylene copolymers (HECO)" whereas heterophasic propylene copolymers comprising polypropylene random copolymer as the base polymer are often referred to as "heterophasic propylene random copolymers (RAHECO)". The term "heterophasic propylene copolymer" encompasses in the present disclosure both the HECO and RAHECO types of the heterophasic propylene copolymers.

Depending on the amount of the polyolefin modifier, the commercially available heterophasic propylene copolymers are typically characterized as "impact copolymers" (ICP) or as "reactor-TPOs" or as "soft-TPOs". The main difference between these types of heterophasic propylene copolymers is that the amount of the polyolefin modifier is typically lower in ICPs than in reactor-TPOs and soft-TPOs, such as not more than 40 wt.-%, particularly not more than 35 wt.-%. Consequently, typical ICPs tend to have a lower xylene cold soluble (XCS) content determined according to ISO 16152 2005 standard as well as higher flexural modulus determined according to ISO 178:2010 standard compared to reactor-TPOs and soft-TPOs.

Suitable heterophasic propylene copolymers include reactor TPOs and soft TPOs produced with LyondellBasell's Catalloy process technology, which are commercially available under the trade names of Adflex^{®}, Adsyl^{®}, Clyrell^{®}, Hifax^{®}, Hiflex^{®}, and Softell^{®}, such as Hifax^{®} CA 10A, Hifax^{®} CA 12A, and Hifax^{®} CA 60 A, and Hifax CA 212 A. Further suitable heterophasic propylene copolymers are commercially available under the trade name of Borsoft^{®} (from Borealis Polymers), such as Borsoft^{®} SD233 CF.

Suitable copolymers of ethylene and vinyl acetate include those having a content of a structural unit derived from vinyl acetate in the range of 4 - 90 wt.-%, preferably 6 - 80 wt.-%, more preferably 8 - 70 wt.-%, based on the weight of the copolymer. Suitable copolymers of ethylene and vinyl acetate are commercially available, for example, under the trade name of Escorene^{®} (from Exxon Mobil), under the trade name of Primeva^{®} (from Repsol Quimica S.A.), under the trade name of Evatane^{®} (from Arkema Functional Polyolefins), under the trade name of Greenflex^{®} from Eni versalis S.p.A., and under the trade name of Levapren^{®} from Arlanxeo GmbH.

In one exemplary embodiment, the polyolefin resin contained in the waterproofing layer comprises at least one heterophasic propylene copolymer and/or at least one propylene-ethylene random copolymer.

In one embodiment, the at least one heterophasic propylene copolymer comprises:
- A) at least one polypropylene having a melting point (Tₘ) of 100°C or more, preferably a propylene homopolymer and/or a random copolymer of propylene having a comonomer content of less than 10 wt.-%, preferably less than 5 wt.-%, based on the weight of the copolymer and
- B) at least one other polyolefin having a glass transition temperature (Tg) of -20°C or less, preferably an ethylene copolymer having a comonomer content of at least 5 wt.-%, preferably at least 10 wt.-%, based on the weight of the copolymer, preferably having a glass transition temperature (Tg) of -25 °C or less, more preferably -35 °C or less, preferably an ethylene-propylene rubber (EPR),
wherein the at least one heterophasic propylene copolymer comprises a matrix phase composed primarily of A) and a dispersed phase composed primarily of B).

Preferably, the at least one heterophasic propylene copolymer is a reactor blend of A) and B), wherein the reactor blend has been obtained by using a sequential polymerization process, wherein constituents of the matrix phase are produced in a first reactor and transferred to a second reactor where constituents of the dispersed phase are produced and incorporated as domains into the matrix phase.

In one exemplary embodiment, the at least one heterophasic propylene copolymer has:
- a flexural modulus at 23°C determined according to ISO 178:2019 standard of not more than 1000 MPa, preferably not more than 750 MPa, more preferably not more than 650 MPa and/or
- a xylene cold soluble content determined according to ISO 16152-2005 standard of not more than 50 wt.-%, preferably not more than 45 wt.-%, more preferably not more than 35 wt.-%, and/or
- a melt flow rate (2.16 kg at 230°C) determined according to ISO 1133-1:2022 standard of not more than 50 g/10 min, preferably not more than 30 g/10 min, more preferably not more than 15 g/10 min and/or
- a melting temperature (Tₘ), determined by DSC according to ISO 11357-1:2023 standard using a heating rate of 2°C/min, of at least 100°C, preferably at least 110°C, more preferably at least 125°C.

In one exemplary embodiment, the at least one propylene-ethylene random copolymer has a content of propylene derived units of 75 - 95 wt.-%, preferably 80 - 90 wt.-% and a content of ethylene derived units of 5 - 25 wt.-%, preferably 9 - 18 wt.-%.

In one embodiment, the at least one propylene-ethylene random copolymer has:
- a flexural modulus at 23°C determined according to ISO 178:2019 standard of not more than 100 MPa, preferably not more than 50 MPa, more preferably not more than 25 MPa and/or
- a melting temperature (Tₘ) determined by DSC according to ISO 11357-1:2023 standard using a heating rate of 2°C/min, of not more than 105 °C, preferably not more than 100 °C, more preferably not more than 100°C and/or
- a heat of fusion (Hf), determined by DSC using a heating rate of 10 °/min, of not more than 80 J/g, preferably not more than 70 J/g, more preferably not more than 65 J/g and/or
- a xylene cold soluble content, determined according to ISO 16152-2005, of at least 75 wt.-%, preferably at least 80 wt.-%, more preferably at least 85 wt.-%, even more preferably at least 90 wt.-%, still more preferably at least 95 wt.-% and/or
- a softening temperature (Tₛ) determined by Ring and Ball measurement according to DIN EN 1238 standard of not more than 90°C, preferably not more than 80°C, more preferably not more than 70°C and/or
- a melt flow rate (2.16 kg at 230°C) determined according to ISO 1133-1 standard of not more than 50 g/10 min, preferably not more than 40 g/10 min, more preferably not more than 35 g/10 min and/or
- an average molecular weight (Mₙ) in the range of 10,000 - 250,000 g/mol, preferably 25,000 - 200,000 g/mol.

Furthermore, the polyvinyl chloride- or polyolefin- based layer may also comprise:
e) at least one mineral filler.

Suitable mineral fillers include, for example, sand, granite, calcium carbonate, clay, expanded clay, diatomaceous earth, pumice, mica, kaolin, talc, dolomite, xonotlite, perlite, vermiculite, Wollastonite, barite, magnesium carbonate, calcium hydroxide, calcium aluminates, silica, fumed silica, fused silica, aerogels, glass beads, hollow glass spheres, ceramic spheres, bauxite, comminuted concrete, and zeolites.

In one exemplary embodiment, the at least one mineral filler is selected from calcium carbonate, mica, kaolin, talc, dolomite, xonotlite, perlite, Wollastonite, barite, and magnesium carbonate, preferably calcium carbonate.

The sealing element may be any type of element used for waterproofing of substrates, particularly in the field of construction industry. In one preferred embodiment, the sealing element is a waterproofing or roofing membrane, particularly a roofing membrane.

The term "roofing membrane" refers in the present disclosure to the conventional meaning of the term roofing membrane, i.e., a membrane comprising a water impermeable sheet of polymeric material that is used for covering an outer surface of a roof deck. Roofing membranes and method for their production are known to a person skilled in the art.

The polyvinylchloride- and polyolefin- based waterproofing layers may further contain one or more additives, for example, UV- and heat stabilizers, antioxidants, flame retardants, dyes, pigments such as titanium dioxide and carbon black, matting agents, antistatic agents, impact modifiers, biocides, and processing aids such as lubricants, slip agents, antiblock agents, and denest aids.

The waterproofing layer may have a thickness determined by using the measurement method as defined in DIN EN 1849-2 standard of 0.5 - 5.0 mm, preferably 0.75 - 3.5 mm, more preferably 1 - 3 mm, most preferably 1 - 2.5 mm.

In one embodiment, the sealing element further comprises a layer of fiber material, which is fully embedded into the waterproofing layer or adhered to a lower major surface of the waterproofing layer. By the expression "fully embedded" is meant that the layer of fiber material layer is fully covered by the matrix of the waterproofing layer.

The layer of fiber material may be used to ensure the mechanical stability of the waterproofing layer when exposed to varying environmental conditions, in particular to large temperature fluctuations or high wind loads.

The term "fiber material" designates in the present document materials composed of fibers comprising or consisting of, for example, organic, inorganic or synthetic organic materials. Examples of organic fibers include, for example, cellulose fibers, cotton fibers, and protein fibers. Particularly suitable synthetic organic materials include, for example, polyester, homopolymers and copolymers of ethylene and/or propylene, viscose, nylon, and polyamides. Fiber materials composed of inorganic fibers are also suitable, in particular, those composed of metal fibers or mineral fibers, such as glass fibers, aramid fibers, wollastonite fibers, and carbon fibers. Inorganic fibers, which have been surface treated, for example, with silanes, may also be suitable. The fiber material can comprise short fibers, long fibers, spun fibers (yarns), or filaments. The fibers can be aligned or drawn fibers. It may also be advantageous that the fiber material is composed of different types of fibers, both in terms of geometry and composition.

Preferably, the layer of fiber material is selected from the group consisting of non-woven fabrics, woven fabrics, and non-woven scrims.

The term "non-woven fabric" designates in the present document materials composed of fibers, which are bonded together by using chemical, mechanical, or thermal bonding means, and which are neither woven nor knitted. Non-woven fabrics can be produced, for example, by using a carding or needle punching process, in which the fibers are mechanically entangled to obtain the nonwoven fabric. In chemical bonding, chemical binders such as adhesive materials are used to hold the fibers together in a non-woven fabric.

The term "non-woven scrim" designates in the present document web-like non-woven products composed of yarns, which lay on top of each other and are chemically bonded to each other. Typical materials for non-woven scrims include metals, fiberglass, and plastics, in particular polyester, polypropylene, polyethylene, and polyethylene terephthalate (PET).

Particularly, the layer of fiber material can be a non-woven fabric, preferably a non-woven fabric having a mass per unit weight of not more than 300 g/m², preferably not more than 250 g/m². In one embodiment, the layer of fiber material is a non-woven fabric having a mass per unit weight of 15 - 300 g/m², preferably 25 - 250 g/m², more preferably 35 - 200 g/m², most preferably 45 - 150 g/m².

Preferably, the non-woven fabric of the layer of fiber material comprises synthetic organic and/or inorganic fibers. Particularly suitable synthetic organic fibers for the non-woven fabric include, for example, polyester fibers, polypropylene fibers, polyethylene fibers, nylon fibers, and polyamide fibers. Particularly suitable inorganic fibers for the non-woven fabric include, for example, glass fibers, aramid fibers, wollastonite fibers, and carbon fibers.

In one embodiment, the non-woven fabric of the layer of fiber material has as the main fiber component synthetic organic fibers, preferably selected from the group consisting of polyester fibers, polypropylene fibers, polyethylene fibers, nylon fibers, and polyamide fibers. In one further embodiment, the non-woven fabric of the layer of fiber material has as the main fiber component inorganic fibers, preferably selected from the group consisting of glass fibers, aramid fibers, wollastonite fibers, and carbon fibers, more preferably glass fibers.

The sealing element of the present invention may be a single- or a multi-ply roofing membrane. The term "single-ply roofing membrane" designates in the present document membranes comprising one single waterproofing layer whereas the term "multi-ply roofing membrane" designates membranes comprising more than one waterproofing layers. In case of a multi-ply roofing membrane, the waterproofing layers may have similar or different compositions.

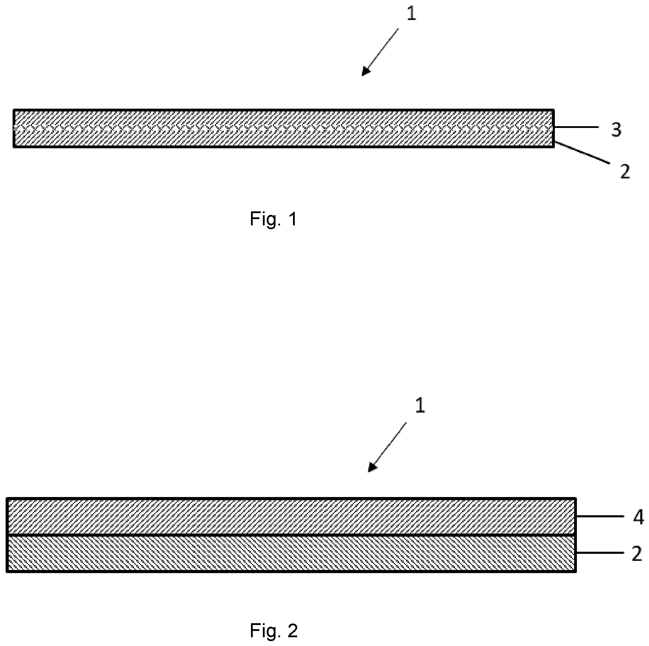

Single- and multi-ply membranes are known to a person skilled in the art and they may be produced by any conventional means, such as by way of extrusion or co-extrusion, calendaring, or by spread coating. In one embodiment, the roofing membrane is a single-ply membrane comprising exactly one waterproofing layer, as shown in Figure 1.

In a further embodiment, the sealing element is a multi-ply membrane comprising at least two waterproofing layers, preferably exactly two waterproofing layers, as shown in Figure 2. In these embodiments, the roofing membrane further comprises a second waterproofing layer having lower and upper major surfaces, wherein the lower major surface of the second waterproofing layer is directly or indirectly bonded to at least portion of the upper major surface of the waterproofing layer.

The second waterproofing layer may be a polyvinylchloride- or polyolefin- based waterproofing layer, as discussed above. Preferably, the second waterproofing layer has substantially similar composition as the waterproofing layer. The second waterproofing layer may further comprise a layer of fiber material, which is fully embedded into the second waterproofing layer. It may, however, be also possible or even preferred that the second waterproofing layer does not contain a layer of fiber material.

The sealing element of the present invention is typically provided in a form of a prefabricated membrane article, which is delivered to the construction site and unwound from rolls to provide sheets having a width of 1 - 5 m and length of several times the width. However, the sealing element can also be used in the form of strips having a width of typically 1 - 20 cm, for example so as to seal joints between two adjacent membranes. Moreover, the sealing element can also be provided in the form of planar bodies, which are used for repairing damaged locations in existing adhered waterproofing, roofing, or facade systems.

Another aspect of the present invention is use of lignin powder to increase thermal stability of a plasticized polyvinylchloride formulation comprising:
a) 25 - 65 wt.-%, preferably 30 - 60 wt.-% of polyvinylchloride resin,
c) 10 - 50 wt.-%, preferably 15 - 45 wt.-% of at least one plasticizer, and
d) 0 - 15 wt.-%, preferably 0 - 10 wt.-% of at least one inorganic pigment.
or of a polyolefin formulation comprising:
a) At least 25 wt.-%, preferably at least 35 wt.-% of polyolefin resin,
c) 0 - 55 wt.-%, preferably 0 - 50 wt.-% of at least one flame retardant, and
d) 0 - 15 wt.-%, preferably 0 - 10 wt.-% of at least one inorganic pigment.

Preferences given above for the polyvinylchloride resin, the at least one plasticizer, the polyolefin resin, the flame retardant, and the inorganic pigment in the waterproofing layer of the sealing element are also applicable for the same components in the plasticized polyvinylchloride formulation and polyolefin formulation.

In one exemplary embodiment, the lignin powder has median particle size d₅₀ determined by sieve analysis according to the method as described in ASTM C136/C136M -2014 standard of 2 - 100 µm, preferably 10 - 60 µm.

It may be preferable that the proportion of the lignin powder in the plasticized polyvinylchloride formulation is 0.5 - 20 wt.-%, preferably 1.5 - 15 wt.-% or in the polyolefin formulation 1.5 - 25 wt.-%, preferably 2.5 - 20 wt.-%.

The plasticized polyvinylchloride and polyolefin formulations can further comprise one or more additives, for example, UV- and heat stabilizers, antioxidants, flame retardants, dyes, pigments such as titanium dioxide and carbon black, matting agents, antistatic agents, impact modifiers, biocides, and processing aids such as lubricants, slip agents, antiblock agents, and denest aids.

The thermal stability of the plasticized polyvinylchloride formulation can be determined by according to ISO 182-3:2023 standard and whereas the thermal stability of the polyolefin formulation can be determined according to ISO 188:2023 standard.

### Examples

The followings materials shown in Table 1 were used in providing the polymer formulations.

**Table 1**

| | | |
|---|---|---|
| PVC | Polyvinylchloride resin K70 | Inovyn |
| Lignin | Kraft lignin, CAS 9005-53-2 | Merck & Cie |
| Plasticizer | Diisononyl phthalate (DINP) | Evonik |
| Thermal stabilizer | Lead free stabilizer | Chemson |
| TPO | Hifax CA 212 | LyondellBasell |

### Preparation of sealing elements

The polymer compositions were melt-processed in a two roll mill and then pressed into sheets having a thickness of 2.0 mm, using a laboratory curing press at a temperature of 190 °C and using a pressing time of 3 minutes at 120 bar.

### Mechanical properties

Tensile strength and maximum elongation (at break) were measured according to ISO 527-3:2018 standard at a temperature of 21 °C using a Zwick tensile tester and a cross head speed of 100 mm/min. Elastic modulus was measured according to ISO 527-2/5/1 under identical conditions.

### Thermal stability PVC

Thermal stability Thermal stability of the PVC formulations was tested according to ISO 182-3:2023 standard. Compound samples have been stored in test tubes at 180°C, and thermal stability was evaluated by color change of attached pH indicator paper. The time it takes to the color change is given in minutes.

### Thermal stability polyolefin

In determining thermal stability of the TPO formulations, a forced heat aging according to ISO 188:2023 standard was used. In this test, small samples (Ø 9 mm) were punched from the sheets prepared as described above and stored on a white piece of paper (80 g/m²) in a hot air oven for 3 hours at 210 °C. After the heat treatment, chemical degradation was judged based on the bleed-out of liquid degradation products. Degree of the bleed-out was determined by the expansion of the front of visible degradation products in millimeters.

The tested polymer compositions and the measured properties as shown in Tables 2 and 3.

**Table 2**

| **Compositions [wt.-%]** | **Ref-1** | **Ex-1** | **Ex-2** | **Ex-3** | **Ex-4** |
|---|---|---|---|---|---|
| PVC resin | 60.61 | 58.82 | 57.14 | 55.56 | 54.05 |
| Lignin | 0.00 | 2.94 | 5.71 | 8.33 | 10.81 |
| Plasticizer (DINP) | 36.36 | 35.29 | 34.29 | 33.33 | 32.43 |
| Thermal stabilizer | 3.03 | 2.94 | 2.86 | 2.78 | 2.70 |
| Total | 100.00 | 100.00 | 100.00 | 100.00 | 100.00 |

| **Properties** | | | | | |
|---|---|---|---|---|---|
| Tensile strength [MPa] | 15.3 | 15.3 | 16.5 | 13.5 | 11.6 |
| Max elongation [%] | 309 | 283 | 333 | 281 | 270 |
| Elastic modulus [MPa] | 9.2 | 14.1 | 15 | 16.9 | 13.7 |
| Thermal stability [min] | 136 | 150 | 143 | 141 | 140 |

**Table 3**

| **Compositions [wt.-%]** | | | | | |
|---|---|---|---|---|---|
| TPO | 100.00 | 95.24 | 90.91 | 86.96 | 83.33 |
| Lignin | 0.00 | 4.76 | 9.09 | 13.04 | 16.67 |
| Total | 100.00 | 100.00 | 100.00 | 100.00 | 100.00 |

| **Properties** | | | | | |
|---|---|---|---|---|---|
| Tensile strength [MPa] | 14.6 | 11.5 | 10.2 | 7.5 | 7.5 |
| Max elongation [%] | 852 | 694 | 649 | 518 | 568 |
| Elastic modulus [MPa] | 68 | 106 | 101 | 84 | 75 |
| Bleed out [mm] | 10 | 3 | 2 | 1 | 0 |

## Claims

1. A sealing element (1) comprising a waterproofing layer (2) comprising:
a) polyvinylchloride or polyolefin resin and
b) lignin powder.

2. The sealing element according to claim 1, wherein the waterproofing layer (2) comprises 0.5 - 25 wt.-%, preferably 1.5 - 20 of the lignin powder.

3. The sealing element according to claim 1 or 2, wherein the lignin powder has a median particle size d₅₀ determined by sieve analysis according to the method as described in ASTM C136/C136M -2014 standard of 2 - 100 µm, preferably 10-60 µm.

4. The sealing element according to any one of previous claims, wherein the waterproofing layer (2) is a polyvinyl chloride- based layer comprising:
a) 25 - 65 wt.-%, preferably 30 - 60 wt.-% of polyvinylchloride resin,
b) 0.5 - 20 wt.-%, preferably 1.5 - 15 wt.-% of the lignin powder,
c) 10 - 50 wt.-%, preferably 15 - 45 wt.-% of at least one plasticizer, and
d) 0 - 15 wt.-%, preferably 0 - 10 wt.-% of at least one inorganic pigment.

5. The sealing element according to claim 4, wherein the at least one plasticizer is selected from the group consisting of linear and branched phthalates, trimellitate plasticizers, adipic polyesters, and biochemical plasticizers.

6. The sealing element according to any one of claims 1-3, wherein the waterproofing layer (2) is polyolefin- based layer comprising:
a) At least 25 wt.-%, preferably at least 35 wt.-% of polyolefin resin,
b) 1.5 - 25 wt.-%, preferably 2.5 - 20 wt.-% of the lignin powder,
c) 0 - 55 wt.-%, preferably 0 - 50 wt.-% of at least one flame retardant, and
d) 0 - 15 wt.-%, preferably 0 - 10 wt.-% of at least one inorganic pigment.

7. The sealing element according to any one of previous claims, wherein the polyolefin resin comprises at least one heterophasic propylene copolymer and/or at least one propylene-ethylene random copolymer.

8. The sealing element according to any one of previous claims, wherein the polyvinyl chloride- based layer or the polyolefin- based layer further comprises: e) At least one mineral filler.

9. The sealing element according to any one of previous claims, wherein the sealing element is a waterproofing or a roofing membrane, preferably a roofing membrane.

10. The sealing element according to any of previous claims, wherein the waterproofing layer (2) has a thickness determined by using the measurement method as defined in EN 1849-2 standard of 0.5 - 5.0 mm, preferably 0.75 - 2.5 mm.

11. The sealing element according to any of previous claims further comprising a layer of fiber material (3) fully embedded into the waterproofing layer (2) or adhered to a lower major surface of the waterproofing layer (2).

12. The sealing element according to claim 11, wherein the layer of fiber material (3) is a non-woven fabric having a mass per unit area of 15 - 300 g/m², preferably 25 - 250 g/m².

13. Use of lignin powder to increase thermal stability of a plasticized polyvinylchloride formulation comprising:
a) 25 - 65 wt.-%, preferably 30 - 60 wt.-% of polyvinylchloride resin,
c) 10 - 50 wt.-%, preferably 15 - 45 wt.-% of at least one plasticizer, and
d) 0 - 15 wt.-%, preferably 0 - 10 wt.-% of at least one inorganic pigment.
or of a polyolefin formulation comprising:
a) At least 25 wt.-%, preferably at least 35 wt.-% of polyolefin resin,
c) 0 - 55 wt.-%, preferably 0 - 50 wt.-% of at least one flame retardant, and
d) 0 - 15 wt.-%, preferably 0 - 10 wt.-% of at least one inorganic pigment.

14. Use according to claim 13, wherein the lignin powder has median particle size d₅₀ determined by sieve analysis according to the method as described in ASTM C136/C136M -2014 standard of 2 - 100 µm, 10 - 60 µm.

15. Use according to claim 13 or 14, wherein the proportion of the lignin powder in the plasticized polyvinylchloride formulation is 0.5 - 20 wt.-%, preferably 1.5 - 15 wt.-% or in the polyolefin formulation 1.5 - 25 wt.-%, preferably 2.5 - 20 wt.-%.
